# EUROPEAN PATENT APPLICATION

(11) **EP 4 530 234 A1**
(43) Date of publication of application: **02.04.2025**
(21) Application number: 24203170.6
(22) Date of filing: 27.09.2024
(51) Int. Cl.: B65G 54/02, B23Q 1/25, B23Q 7/14

(54) **LINEAR MOTOR CONVEYOR SYSTEM FOR HEAVY AND/OR LARGE PAYLOADS**

(30) Priority: 29.09.2023 US 202363586501 P
(71) Applicant: ATS Corporation, Cambridge, Ontario N3H 4R7 (CA)
(72) Inventor: HOGAN, Roger, Cambridge, Ontario, N3H 4R7 (CA); TAYLOR, Javan Kenneth, Cambridge, Ontario, N3H 4R7 (CA)
(74) Representative: Ipey

(57) **Abstract**

A linear motor conveyor system including: a track; at least two moving elements configured to move on the track, wherein the at least two moving elements may include a primary moving element and a secondary moving element; a tooling plate mounted on the at least two moving elements, the tooling plate mounted to the at least two moving elements by a support apparatus including: a first pivot assembly provided to the primary moving element; and a second pivot assembly provided to the secondary moving element, wherein the first pivot assembly and the second pivot assembly support the tooling plate such that the tooling plate can move in relation to the at least two moving elements through at least two degrees of freedom. A method for carrying a heavy/large payload on a linear motor conveyor system using the above concepts.

## Description

### FIELD

The present disclosure relates generally to linear motor conveyor systems for transporting moving elements and, more particularly to a linear motor conveyor system for heavy or large payloads.

### BACKGROUND

In manufacturing environments, a linear motor conveyor system is often used to move parts among stations at which operations are performed on the parts during a manufacturing process.

One of the parameters that can be important in the manufacturing process can be the weight of the payload (for example, parts) that is able to be carried by the moving elements of the linear motor conveyor system. In linear motor systems, moving elements are moved by electromotive forces acting on the moving elements. In a manufacturing process, and in particular on a linear motor conveyor, forces, including acceleration, on the moving element can be high in order to move or stop the moving element quickly in order to increase production speeds. As such, moving elements tend to be smaller and linear motor conveyors tend to work better with smaller weight parts. Smaller weight parts can be accelerated and decelerated more easily without as much stress on the moving elements or conveyor track. In a manufacturing environment, there is also generally a need to have curved tracks on the conveyor system, to allow for better use of floor space and the like, which also tends to require smaller moving elements because of the additional forces encountered on going around curves. Curved tracks also allow for a closed loop system allowing moving elements to travel around the system.

Notwithstanding the foregoing, there has been interest in providing linear motor conveyors for larger/heavier payloads. While there are large railway type systems utilizing linear motor technology, these systems are very bulky and costly and are generally not suitable for a manufacturing environment, where space and cost must be carefully controlled.

Therefore, there is a need for a conveyor system that is capable of carrying a large or heavy payload while also maintaining stability and ease of handling for the moving elements.

The above information is presented as background information only to assist with an understanding of the present disclosure. No determination has been made, and no assertion is made, as to whether any of the above might be applicable as prior art with regard to the present disclosure.

### SUMMARY

According to an aspect herein there is provided a linear motor conveyor system including: a track; at least two moving elements configured to move on the track, wherein the at least two moving elements may include a primary moving element and a secondary moving element; a tooling plate mounted on the at least two moving elements, the tooling plate mounted to the at least two moving elements by a support apparatus including: a first pivot assembly provided to the primary moving element; and a second pivot assembly provided to the secondary moving element, wherein the first pivot assembly and the second pivot assembly support the tooling plate such that the tooling plate can move in relation to the at least two moving elements through at least two degrees of freedom.

In some cases, the at least two degrees of freedom may include pitch and yaw.

In some cases, the at least two degrees of freedom may include three degrees of freedom and the three degrees of freedom may include pitch, yaw and roll.

In some cases, the first pivot assembly and second pivot assembly may have the same configuration.

In some cases, the first pivot assembly is configured to provide rotation about each of a yaw axis and a pitch axis, relative to the moving element carrying the first pivot assembly.

In some cases, the second pivot assembly is configured to provide rotation about each of a pitch, yaw and roll axis, relative to the moving element carrying the second pivot assembly.

In some cases, at least one of the first pivot assembly and the second pivot assembly may include: a body, a T-shaped member; and ball bearings supporting the T-shaped member in relation to the body to allow the T-shaped member to provide rotation about a yaw axis and a pitch axis, relative to the moving element.

In some cases, at least one of the first pivot assembly and the second pivot assembly may further include a flexure section provided to the T-shaped member to allow the T-shaped member to provide rotation about a roll axis, relative to the moving element.

In some cases, the second pivot assembly is configured to allow rotation about a yaw axis, rotation about a pitch axis, perpendicular to the yaw axis and rotation, to at least a predetermined amount, about a roll axis, perpendicular to both the yaw and pitch axes.

In some cases, the at least two moving elements may further include at least one intermediate moving element between the primary and secondary moving elements, the support system further including a connection between the at least one intermediate moving element and the tooling plate. In this case, the connection between the at least one intermediate moving element and the tooling plate may include a slide that allows for movement of the tooling plate in relation to the intermediate moving element in at least one degree of freedom.

According to another aspect herein, there is provided a method for carrying a heavy/large payload on a linear motor conveyor system, the method including: configuring at least two moving elements to support a tooling plate by providing each moving element with a pivot assembly supporting the tooling plate, wherein each of the pivot assemblies allow the tooling plate to move in relation to the moving element in at least two degrees of freedom.

In some cases, the at least two degrees of freedom may include pitch and yaw.

In some cases, the method further may include configuring at least one pivot assembly to allow the tooling plate to move in a third degree of freedom. In this case, the third degree of freedom may be roll.

Other aspects and features of the present disclosure will become apparent to those ordinarily skilled in the art upon review of the following description of specific embodiments in conjunction with the accompanying figures.

### BRIEF DESCRIPTION OF FIGURES

Embodiments of the present disclosure will now be described, by way of example only, with reference to the attached Figures.
Figure 1 shows a track section of a conveyor system in accordance with an embodiment;
Figure 2 shows a track section of a conveyor system in accordance with another embodiment;
Figure 3 illustrates an example of guide rails that may be used with the embodiment illustrated in figure 2;
Figure 4 illustrates a curved track section of a conveyor system such as that of Fig. 2 with a plurality of moving elements;
Figure 5 illustrates a track section with two different sizes of moving elements;
Figures 6A and 6B indicate forces on a moving element under a load;
Figure 7A illustrates a perspective view of a linear motor conveyor system according to an embodiment;
Figure 7B illustrates a top view of the linear motor conveyor system of Fig. 7A;
Figure 7C illustrates a front view of the linear motor conveyor system of Fig. 7A;
Figure 7D illustrates a right side view of the linear motor conveyor system of Fig. 7A;
Figure 8 illustrates a detailed perspective view of a portion of the linear motor conveyor system of Fig. 7A;
Figure 9A illustrates a perspective view of a first pivot assembly according to an embodiment when provided to a moving element;
Figure 9B illustrates a top view of the first pivot assembly of Fig. 9A;
Figure 9C illustrates a front view of the first pivot assembly of Fig. 9A;
Figure 9D illustrates a right side view of the first pivot assembly of Fig. 9A;
Figure 9E illustrates a section view of the first pivot assembly of Fig. 9A;
Figure 10A illustrates a perspective view of a second pivot assembly according to an embodiment when provided to a moving element;
Figure 10B illustrates a top view of the second pivot assembly of Fig. 10A;
Figure 10C illustrates a front view of the second pivot assembly of Fig. 10A;
Figure 10D illustrates a side view of the second pivot assembly of Fig. 10A;
Figure 10E illustrates a cross-sectional view of the second pivot assembly of Fig. 10A
Figure 10F illustrates a detailed cross-sectional view of the second pivot assembly of Fig. 10A; and
Figure 11 illustrates a perspective view of a large/heavy payload apparatus according to an embodiment.

### DETAILED DESCRIPTION

The following description with reference to the accompanying drawings is provided to assist in a comprehensive understanding of example embodiments as defined by the claims and their equivalents. The following description includes various specific details to assist in that understanding but these are to be regarded as merely examples. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not intended to be limited to the bibliographical meanings, but are merely used by the inventor to enable a clear and consistent understanding. Accordingly, it should be apparent to those skilled in the art that the following description of embodiments is provided for illustration purpose only and not for the purpose of limiting the invention as defined by the appended claims and their equivalents.

Generally, the present disclosure provides a linear motor conveyor system using two or more moving elements to carry a heavier payload. In particular, the linear motor conveyor system includes a combination tooling tray that is attached between two or more moving elements to support the payload.

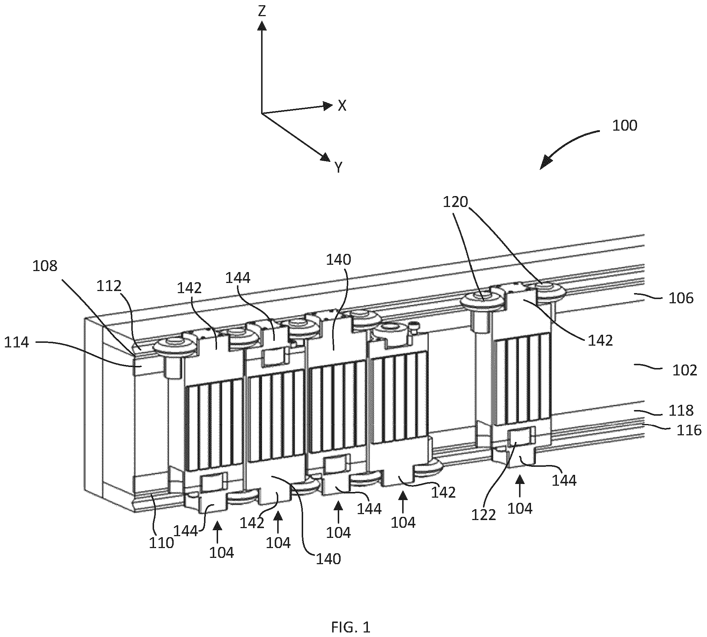

Figure 1 illustrates a conveyor system 100 having a track 102. The track 102 is configured to interact with one or more moving elements 104 (five of which are illustrated) which are configured to ride or travel along the track 102. Some of the principles of operation of a similar track 102 are described in more detail in U.S. Patent No. 8,397,896 to Kleinikkink et al., which is hereby incorporated herein by reference.

In some embodiments, track 102 may be composed of a plurality of track sections (not shown) which are mechanically self-contained and separable from one another so as to be modular in nature. In this case, the track sections may be mounted on a support (not shown) so as to align and abut one another in order to form the track 102. In order to be modular, each track section may house self-contained electronic circuitry for powering and controlling the track section.

The conveyor system 100 includes a track surface that produces a magnetic force for moving the moving element 104 along the track 102. The magnetic force also captures the moving element 104 on the track 102. The magnetic force is created by the interaction of the magnetic flux created by coils (not shown) embedded under the track surface and magnetic elements of the moving element 104. The magnetic force can be thought of as having a motive force component for directing movement of the moving element 104 along an X axis 130 (direction of travel) on the track 102, a capturing force component to hold, on a Y axis 132 (laterally), the moving element 104 on the track 102 and in spaced relation to the track surface. There is also a Z axis perpendicular to both the X and Y axes. In at least some conveyor systems, the motive force and the capturing force is provided by the same magnetic flux.

The track surface includes a first guide rail 108 and a second guide rail 110 configured to support the moving element 104, in this example, primarily along the Y axis and Z axis. The first and second guide rails 108, 110 are configured such that the moving element 104 may be removed from the track surface when the magnetic force is overcome. The magnetic force is overcome, for example, when a user pries the moving element 104 away from the track surface. In an alternative, the moving element 104 may be removed from the track surface when the magnetic force is reversed, reduced, or removed.

The first guide rail 108 supports at least some of the moving elements 104 horizontally while it may support other moving elements 104 horizontally and vertically. In particular, the first guide rail 108 has a "V" shaped profile 112 adjacent to a smooth surface 114 with a flat profile. It is intended that the "V" shaped profile 112 will support and guide some of the moving elements 104 horizontally (X and Y axes) and vertically (Z axis) while the flat profile will support other moving elements horizontally. The second guide rail 110 has a similar structure in that it includes a "V" shaped profile 116 (in this case, on the outer side or bottom of the guide rail) and a smooth flat surface 118 (in this case, on the inner side or on top of the "V" shaped profile). It will be understood that rails having an alternate shape (i.e. other than "V" shaped) may be used with corresponding wheels or bearings on the moving elements.

Each moving element 104 has at least one shaped bearing or wheel 120, wherein the profile of the wheel is configured to correspond to the shaped profile of the first and second guide rails. Each moving element 104 further includes at least one flat wheel 122. In this embodiment, the moving element 104 includes a set of shaped wheels 120. It is intended that the dual sets of guide rails 108, 110 allow for the shaped wheels 120 to overlap as between adjacent moving element. However, in other embodiments, the moving element may have shaped wheels that do not overlap, or other configurations of wheels.

In a conveyor system without guide rails that enclose the bearings, as described herein, the torque that the moving element can handle is generally impacted by i) the pitch or spacing of the supporting wheels (also referred to as "wheel pitch") and ii) the distance the linear motor (or driving element) is away from the guide rails or wheels (also referred to as "rail offset"). In particular, this may be the distance from the centerline of the guide rail/wheels (because they counter the torque) to the centerline of the linear motor (or driving force/thrust). In some cases, this may be the distance the center of mass of the moving element is from the supporting wheels (also referred to as "wheel offset"). In some situations, the friction of the lower wheels may also contribute to taking up some of the torque and could be included in the calculations if necessary. The rail offset and the wheel offset are measured along the Z-axis (described herein). As the longitudinal wheel pitch decreases and/or the rail offset increases, the torque on the bearings/wheels about the Y-Axis increases (the Y-axis is perpendicular to the direction of travel and perpendicular to the track, as shown in Fig. 1). As this torque on the bearings increases, acceleration, deceleration and payload are constrained to achieve stable motion. A way to evaluate this stability is the ratio of the wheel pitch to the rail offset. The higher this ratio is, the higher the chance of stable motion while maintaining acceleration, deceleration, payload and cantilever at appropriate levels for efficient operation. Generally speaking, a ratio of 1:1 and higher may enable stable performance. Ratios lower than 1:2 may constrain performance. Similar concepts can apply to the ratio between wheel pitch and wheel offset.

As noted above, the torque that the moving element can handle can be impacted by i) the pitch or spacing of the V-wheels and ii) the distance the linear motor (or driving element) is away from the V-rails. As the V-wheel pitch decreases and/or the distance between the V-rails and the driving element increases, the torque on the bearings about the Y-axis increases. As this torque on the bearings increases, acceleration, deceleration and payload are constrained to achieve stable motion. In one example of the present embodiment, the goal is to obtain a ratio of 1:1.

One of the reasons to maintain a larger wheel diameter is that, for example, at the 30 mm wheel diameter, standard rotary bearings can still be used. As an example, bearings of the size "10 mm ID / 19 mm OD / 5 mm height" can be used. This is at the lower end of standard rotary bearing sizes that are cost effective with multiple options available for shielding, sealing and payload ratings. Bearings for smaller wheels, such as 18 mm diameter, become more delicate, are not as robust for industrial applications, have higher contact stresses and have fewer options for sealing and shielding. These are typically magneto bearings with lower payload ratings. Smaller diameter wheels also generally don't roll over rail joints as well as larger wheels. So in addition to a poor stability ratio, the resulting smaller wheels can also constrain performance and reliability.

Figure 1 illustrates an embodiment with a single flat profile wheel on one portion of the moving element but it would be understood that a moving element with more than one or a set of flat wheels could also overlap with adjacent moving elements via appropriate design.

In this embodiment, the moving elements 104 can be oriented in pairs, such that the wheels with the shaped profile of the first moving element are located on the first guide rail and the wheels with the shaped profile of the second moving element are located on the second guide rail.

Generally, each moving element 104 has a body 140 shaped to allow the wheels 120, 122 of an adjacent moving element 104 to overlap. In this embodiment, the body 140 has a rectangular shape with a first support projection 142 between the wheels 120, and a second support projection 144 near the wheel 122. As shown, each moving element can be inverted compared to the adjacent moving element. Accordingly, the second projection 144 of one moving element is located between the wheels 120 of two adjacent moving elements in an overlapping arrangement.

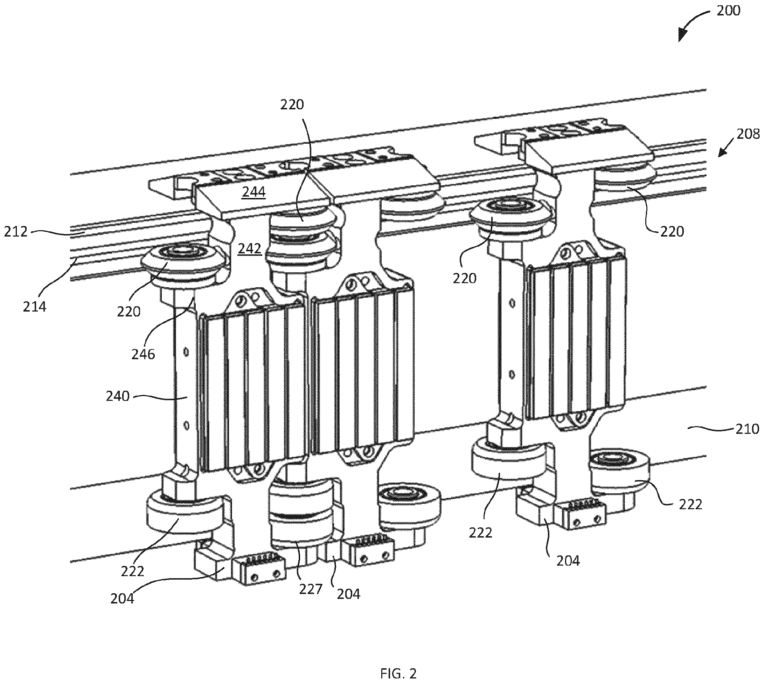

Figure 2 illustrates another embodiment of a conveyor system 200 and moving elements. In this embodiment, a first guide rail 208 may include two shaped portions 212 and 214 that are adjacent to each other and in this case, at a top side of a track. A second guide rail 210 may be a flat rail provided opposite to the first guide rail 208, in this case, at the bottom of the track 202. The second guide rail is intended to be sufficiently wide to allow the guide rail to accommodate two offset wheels or bearings.

The moving element 204 may include two sets of wheels or bearings. The first set of bearings 220 rides on the first guide rail 208. The first set of bearings 220 has an edge profile that corresponds to the profile of the first guide rail 208. In this embodiment, the first set of bearings 220 has a "V" shaped profile that matches the opposite "V" shape profile of each of the portions 212 and 214 of the first guide rail 208. The first set of bearings 220 may alternately have a "U" shaped profile or another appropriately shaped profile intended to support the moving element 204 along a Z axis. It is intended that the first set of bearings 220 may be offset to allow one bearing to be accommodated in the first portion 210 of the first guide rail 208 and a second bearing to be accommodated in the second portion 214 of the first guide rail 208.

The second set of bearings 222 rides on the second guide rail 210. The second set of bearings 222 is intended to have an edge profile that corresponds to the profile of the second guide rail 210. In an embodiment, the second set of bearings has a flat profile (e.g., a flat wheel) that matches the flat profile of the second guide rail 210. The second set of bearings 222 may include two offset bearings which may roll a bit higher or lower on the second guide rail 210 to adapt to any non-parallelism with the first guide rail. In some cases, the second set of bearings 222 may be a single bearing centrally located on each moving element and configured to engage the second guide rail 210.

In this example embodiment, the moving elements 204 may all be oriented in the same direction yet continue to overlap with neighboring moving elements on either side. For example, the moving element 204 has a body 240 with a support projection 242 and an overhang 244 with one wheel 220 supported below the overhang 244. The body 240 also has a shoulder 246 with the other wheel 220 supported above the shoulder 246. The wheel 220 on the overhang 244 of one moving element 204 overlaps the wheel 220 on the shoulder 246 of an adjacent moving element 204.

In the embodiment shown in Figure 2, the moving element 204 has two offset "V" shaped bearings 220 and two offset flat bearings 222. The two flat bearings 222 and the two V-shaped bearings 220 (four bearings in total) may provide increased stability in rotation about X, Y and Z axes. This may allow payloads mounted to the moving element 204 that have higher cantilever than a three-bearing configuration. With four bearings 220, 222, the center of gravity of an added payload that is mounted to the moving element 204 may also be shifted farther away from the track while maintaining stability.

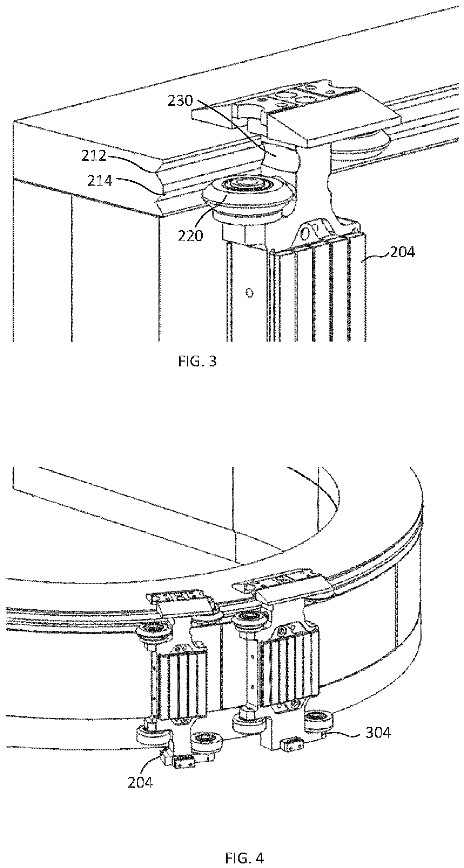

Figure 3 illustrates the first guide rail of Figure 2 in further detail. Allowing for the overlapping bearings or wheels is intended to enable a bearing solution that can be sized to handle the forces and demands of a linear motor conveyor. Having dual portions in at least one guide rail is intended to allow for the bearings/moving elements to overlap.

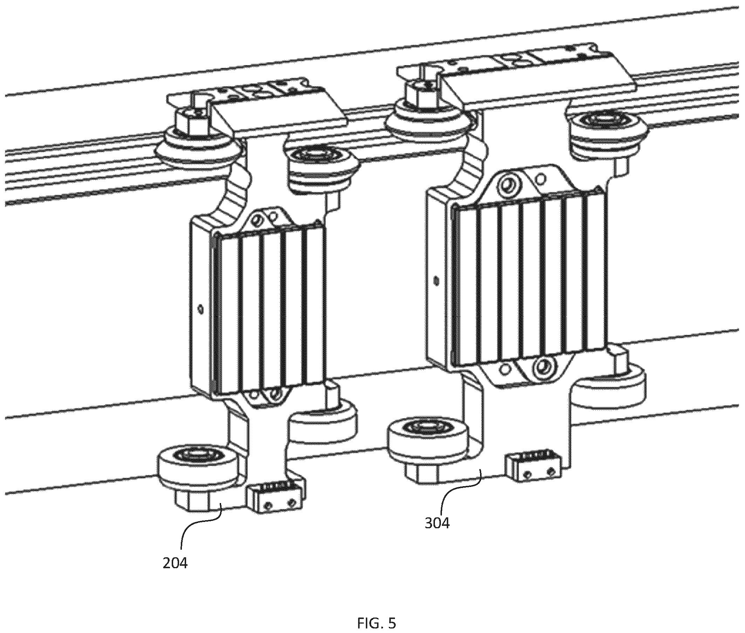

Figures 4 and 5 illustrate an alternative embodiment that is intended to support different bearing spacing on the moving elements with common rails and common linear motors. In particular, Figure 4 illustrates a common curved rail while Figure 5 illustrates a common straight rail. In particular, the moving elements 204, 304 in Figs. 4 and 5 can have different dimensions, in this case in a horizontal (X-axis) direction. Accommodating various dimensions of moving elements may further provide for increased stability to support loads of varying weights and/or loads with varying cantilevers. Conventional mechanical solutions that support wheels with both narrow and wider spacing can be problematic on curves as the motor to magnet gap (that is, distance between the motor on the track and the magnet on the moving element, sometimes called the "air gap" or "magnet gap") changes with the wheel spacing of the moving element. It can be a costly solution to provide multiple curved motors and/or curved rail profiles for various wheel spacings (and the related tooling pitches). In Figures 4 and 5, the rail curve profiles may be determined to allow for adequate clearance for the magnet gap for the moving element with the widest wheel gap 304, while the moving element 204 with the narrower wheel profile may have a larger magnet gap. As long as the magnet gap is maintained at an appropriate distance, a range of sizes of moving elements may be used on the same rail curve.

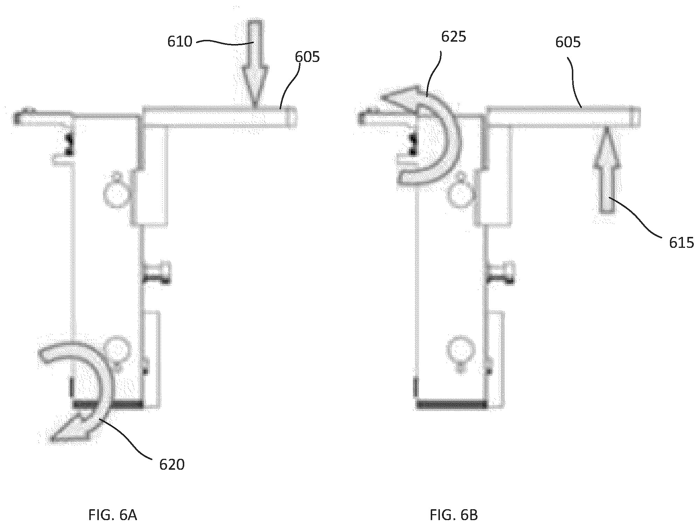

With the above backdrop, it will be understood that there will be a limit to the payload that can be carried by a moving element with a predetermined wheel spacing while also keeping the linear motor conveyor a reasonable size for a manufacturing environment and to allow various sizes of moving elements to operate. As shown in Figs. 6A and 6B, illustrating moving elements for a track in which the moving elements move along a side of the track (sometimes called a horizontal track), a payload carried by a moving element will be affected by the size of the pallet/tooling tray 605 carried by the moving element (i.e. distance of load from the wheels) and the weight of the payload (illustrated by arrow 610) placed on the pallet 605. The payload may also be operated on while on the pallet 605 and thus any processing force (illustrated by arrow 610 or 615) can also be taken into account. As shown in Fig. 6A, the rotation point for the downward moment load 620 is calculated from the flat wheels for downward forces and, as shown in Fig. 6B, the rotation point for the upward moment load 625 is calculated from the v-wheels for upward forces. There may be an upward force on the pallet due to process tooling acting upward or the like. In other track arrangements, for example, in which the moving element moves on top of the track, the forces can be in other orientations, such as left/right forces instead of up/down forces.

In linear motor conveyor systems, which involve high speeds and accelerations, providing the correct level of forces can be very important for safe, efficient operation. As noted above, this can be handled to some extent by varying the wheel spacing of moving elements but wheel spacing can only be expanded so far due to other concerns, such as moving around corners and the like. The following embodiments make use of two or more moving elements to allow a linear motor conveyor system to safely and efficiently carry larger/heavier payloads than might otherwise be possible. For example, using two or more moving elements allows for the equivalent of a larger wheel-base on a single moving element. This larger wheel-base can be obtained without increasing the size of the moving elements and allows the moving elements to maintain an appropriate magnet spacing on turns, or the like, while still allowing larger or heavier payloads to be carried with stability. Further, the use of two or more moving elements allows for an increase in the driving force without making a larger moving element, which, in turn, allows for heavier payloads while maintaining similar motion performance.

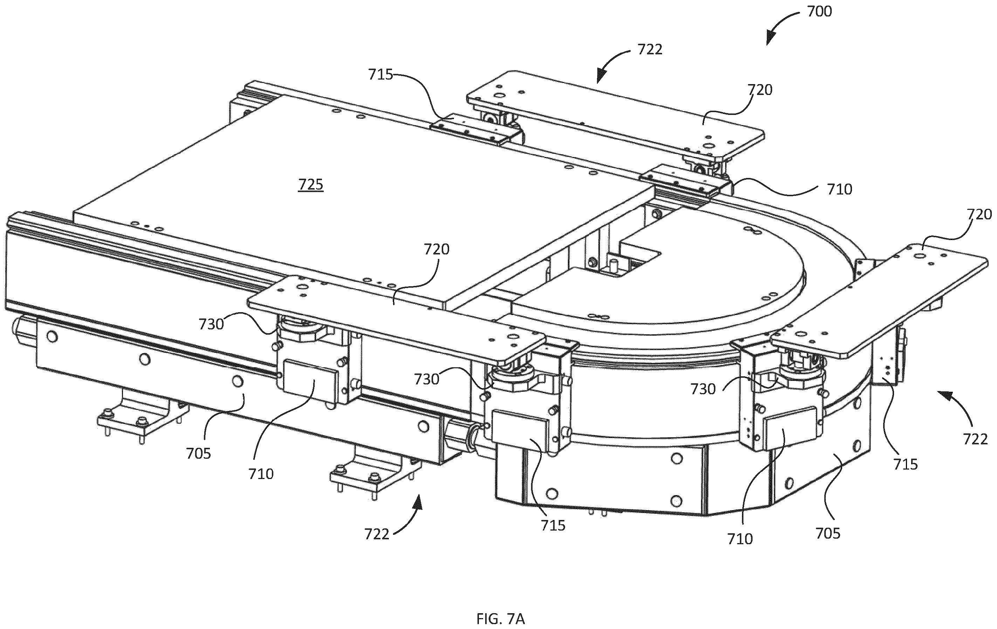

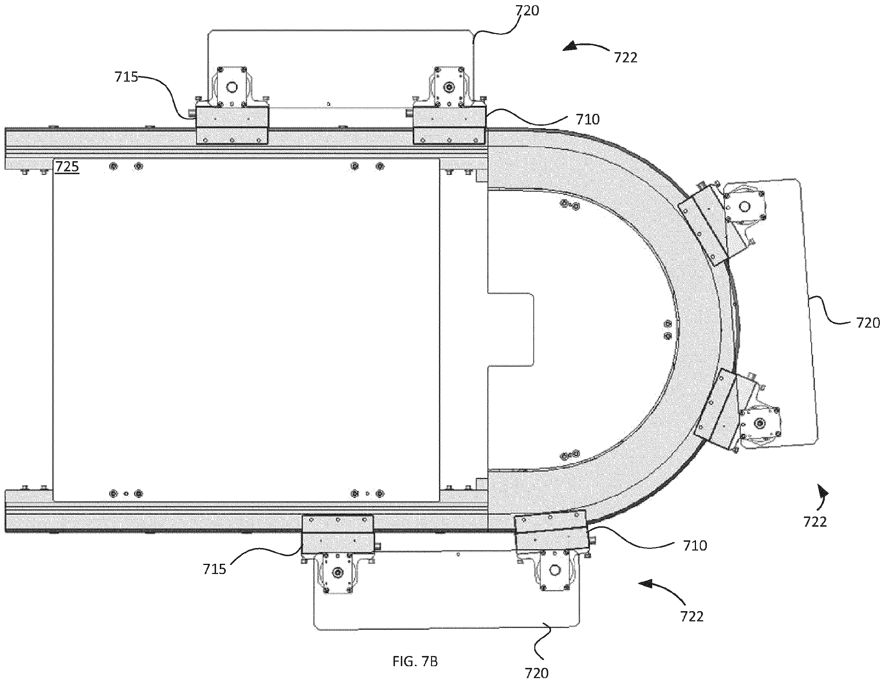

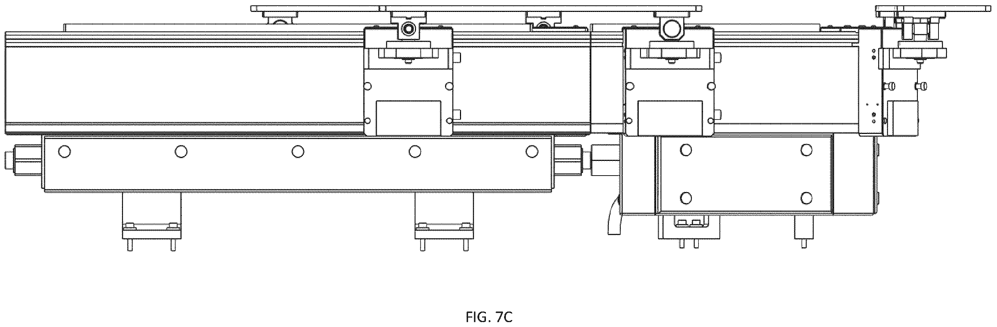

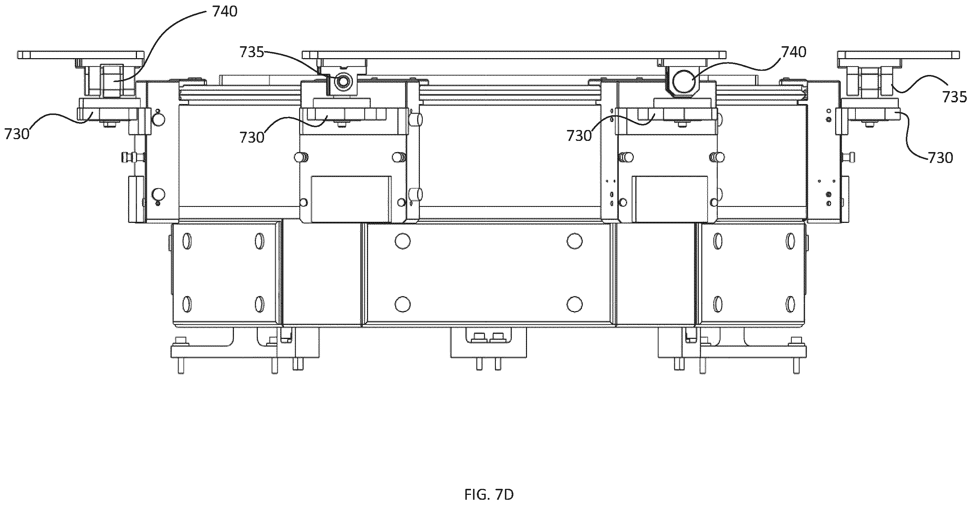

Figure 7A is a perspective view of a linear motor conveyor system 700 according to an embodiment herein. Figs. 7B, 7C, and 7D are top, front and right side views of the conveyor system of Fig. 7A. The linear motor conveyor system 700 includes a plurality of track sections 705 (including both straight and curved track sections), a plurality of moving elements 710, 715 (generally in pairs, referred to as a primary (sometimes master) moving element 710 and a secondary (sometimes slave) moving element 715) and a tooling tray or plate 720 for each pair of moving elements. The primary and secondary moving elements and the tooling tray can be collectively referred to as a large/heavy payload apparatus 722 (sometimes called a support apparatus) according to an embodiment herein. The linear motor conveyor system 700 would also generally include a controller or control system 725 for controlling the conveyor system 700. In Figs. 7A-D, the conveyor system 700, track sections 705, and moving elements 710, 715 are similar to those illustrated in Figs. 2-5 but do not include the overlapping wheels. It will be understood that various embodiments of linear motor conveyor systems, track sections, and moving elements can be implemented together with the embodiments described herein.

In some embodiments, the primary moving element 710 and secondary moving element 715 can be physically linked by the tooling tray 720 so that they move together. In this case, there could be a moving element (generally the primary 710) that would provide position feedback and propulsion while the secondary moving element 715 could operate without position feedback or propulsion. However, due to the availability of independent control of moving elements on the linear motor conveyor system, the secondary moving element 715 could also provide propulsion by having the control system 725 energize the appropriate electromagnetic coils. As an example, the control system could mirror the coil control from the primary moving element but offset (in a physical sense) by a predetermined spacing of the secondary moving element. In this case, the calculations may need to be adjusted on curved track sections, but this could be accounted for in the control system. If the secondary moving element 715 includes both position feedback and propulsion, there may not be a need to rely on a mechanical/physical linkage of the tooling tray 720 and the connections to the tooling tray could be provided with a suspension or the like to allow for slight differences in the movement of the primary and secondary moving elements.

As shown in Figs. 7A-D, each of the primary and secondary moving elements are provided with a support shelf 730. On the primary moving element, the support shelf supports a first pivot assembly 735 and, on the secondary moving element, the support shelf supports a second pivot assembly 740. The first and second pivot assemblies then support the tooling tray 720 that is used to hold the payload to be carried. In some cases, the support shelf 730 may be included as a part of the pivot assemblies and provide for attachment of the pivot assembly to the moving element. As illustrated, the use of the first and second pivot assemblies with the tooling tray allows for the moving elements to move along a straight track section and then pivot to allow the moving elements to move around the curved track section while maintaining stability of the tooling tray. The use of first and second pivot assemblies is intended to assist with handling any misalignment in, for example, track sections, by allowing adjustment in yaw and pitch of the tooling tray in relation to the moving elements (i.e. two degrees of freedom). In some cases, the use of different first and second pivot assemblies can also allow for tooling tray roll (i.e. a third degree of freedom) for at least one of the first and second pivot assemblies. It will be understood that if there are more than two moving elements supporting the tooling tray, each moving element may include a pivot assembly for support of and/or connection to the tooling tray. The use of two or more moving elements to support the tooling tray allows a heavier and/or larger payload to be carried compared to that which could be carried by a single moving element.

In some embodiments, there may also be additional intermediate moving elements positioned between the primary and secondary moving elements. The intermediate moving elements could provide additional support for the tooling tray, particularly in heavier payload situations. In the example of having one intermediate moving element (i.e. a third moving element) supporting the tooling tray, the intermediate moving element could include a slide/bearing slide between the intermediate moving element and the tooling plate rather than a pivot assembly and the slide/bearing slide could be configured to slide in/out perpendicular to the conveyor track to allow movement around a curved track section.

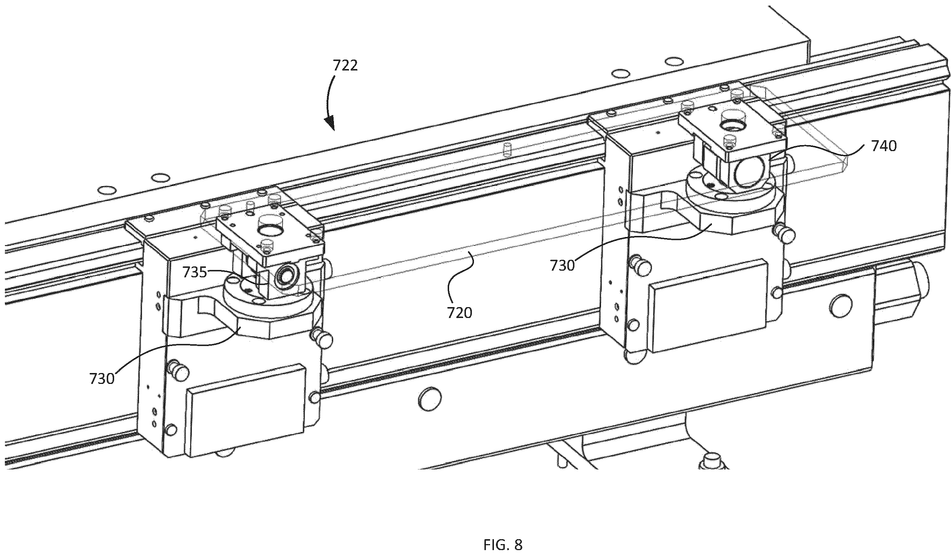

Fig. 8 is a perspective view showing a portion of a linear motor conveyor system including primary 710 and secondary 715 moving elements carrying a tooling tray 720 that is shown transparent to illustrate the first and second pivot assemblies 735, 740. As above, the primary and secondary moving elements, the first and second pivot assemblies and the tooling tray may be referred to as a large/heavy payload apparatus 722. Each of the first and second pivot assemblies is intended to support at least some movement along at least two degrees of freedom to allow for movement around corners, manufacturing tolerances, and the like. In this embodiment, the first and second pivot assemblies are movable in order to handle at least two of roll, pitch, and yaw.

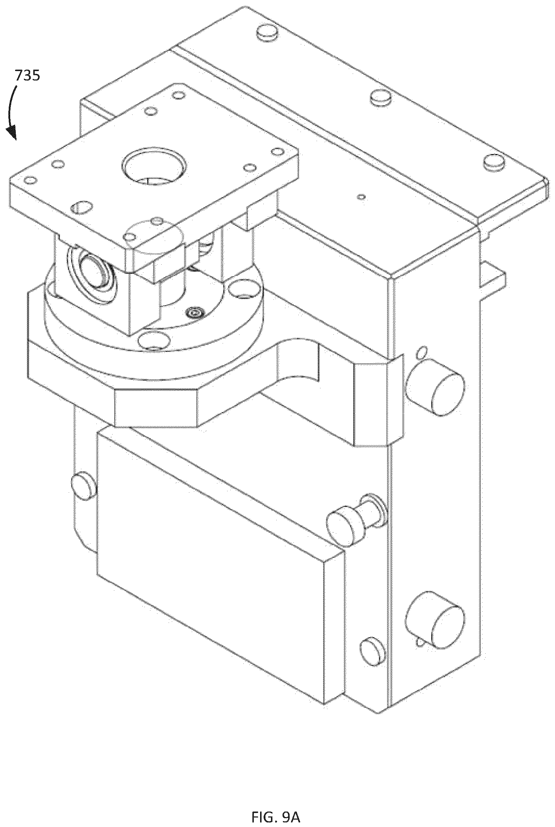

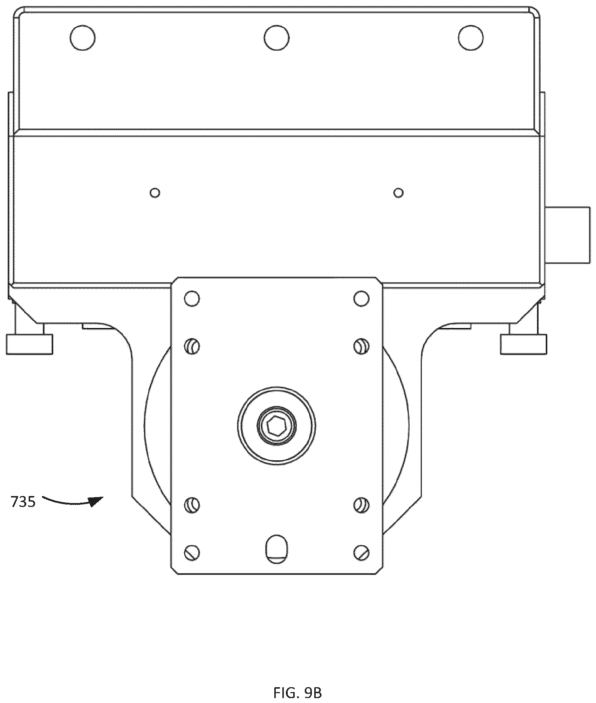

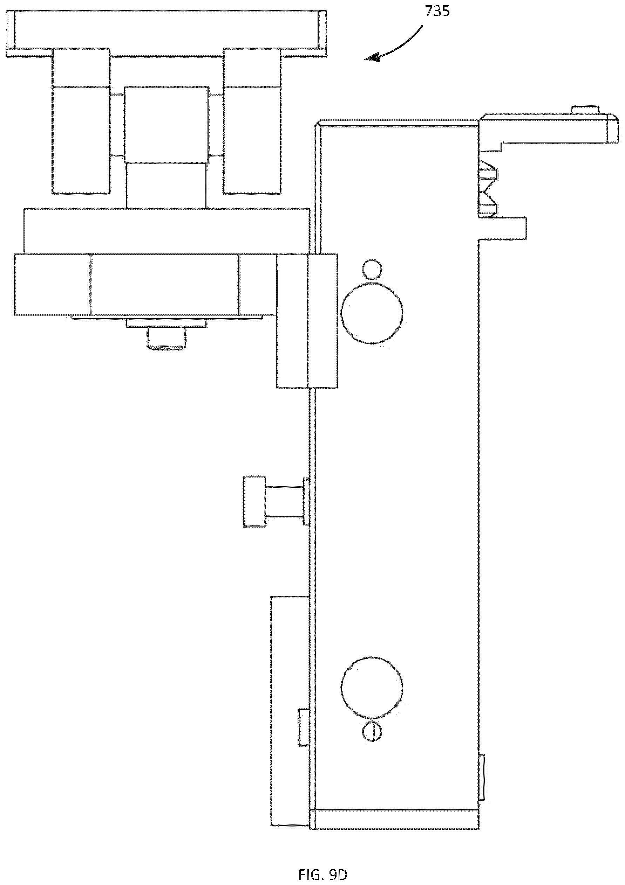

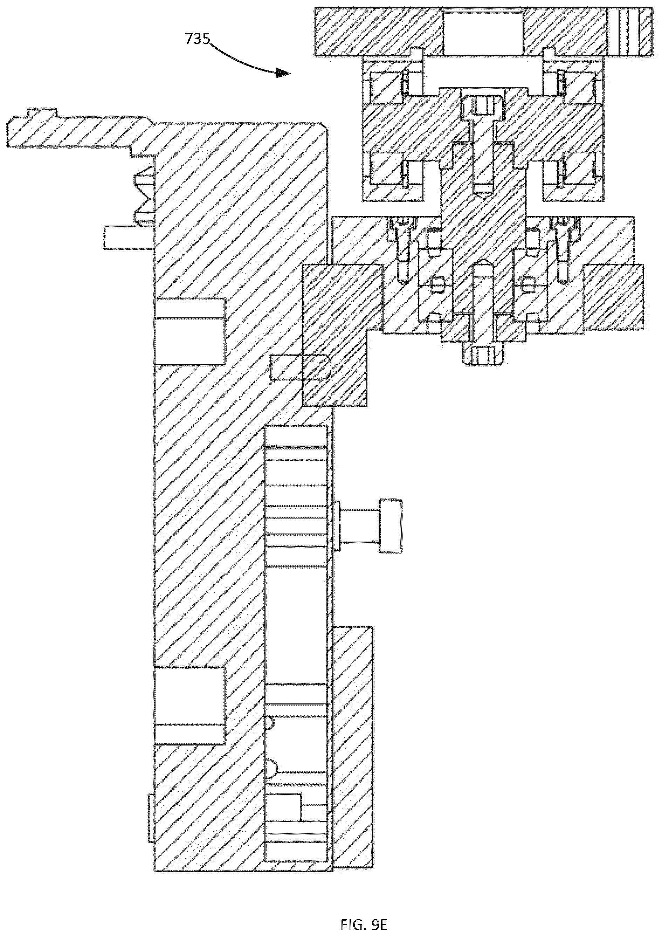

Fig. 9A is a perspective view of an embodiment of the first pivot assembly 735 together with a moving element. Figs. 9B-9E are top, front, side, and side cross-sectional views of the first pivot assembly of Fig. 9A. As illustrated, the first pivot assembly is configured to allow the tooling plate 720 to move in relation to the moving elements as follows:
Roll - n/a
Pitch - 2x deep groove ball bearings with T-shaped member supported by a body, wherein the body may include a base for connection to the moving element and a top for connection to the tooling plate
Yaw - Option 1: 2x back-to-back angular contact bearings with housing
- Option 2: 2x back-to-back angular contact bearings + 1x deep groove ball bearing with housing (illustrated)

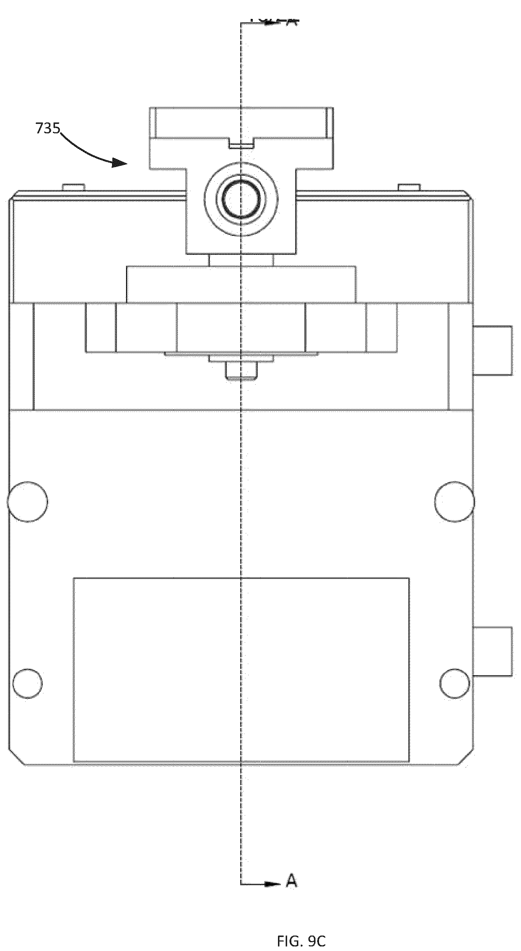

The first pivot assembly 735 is mounted on a support shelf/carrier plate 730 of the moving element. As illustrated, the first pivot assembly is configured to allow the tooling plate to rotate about a central (yaw) axis (into and out of the page in Fig. 9B) and rotate about a pitch axis, perpendicular to the yaw axis (into and out of the page in Fig. 9C).

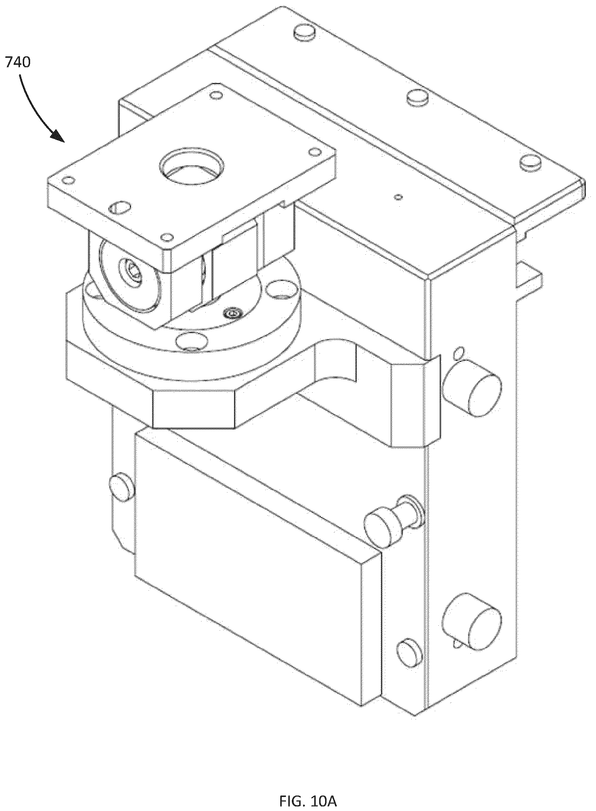

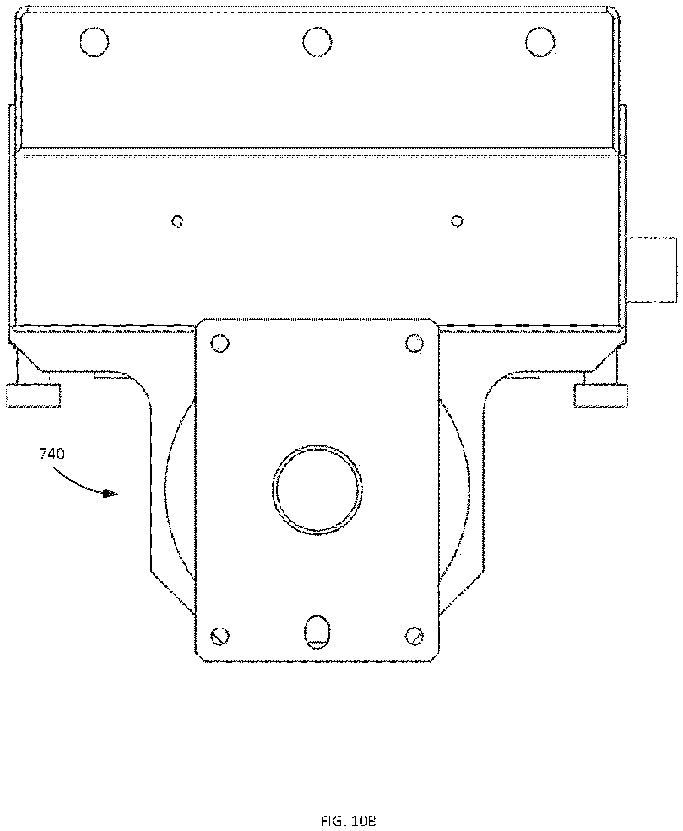

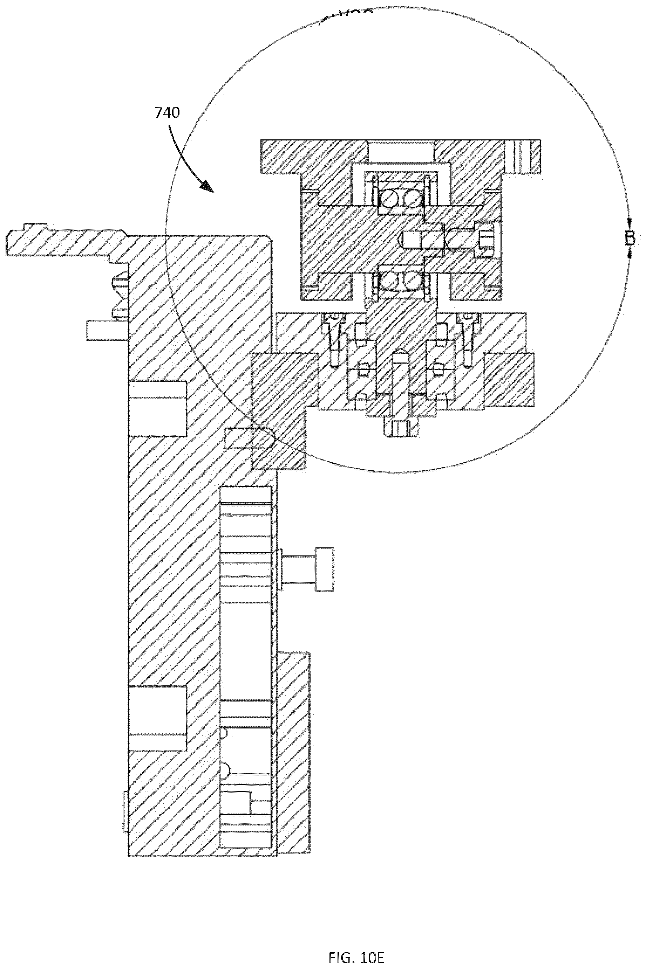

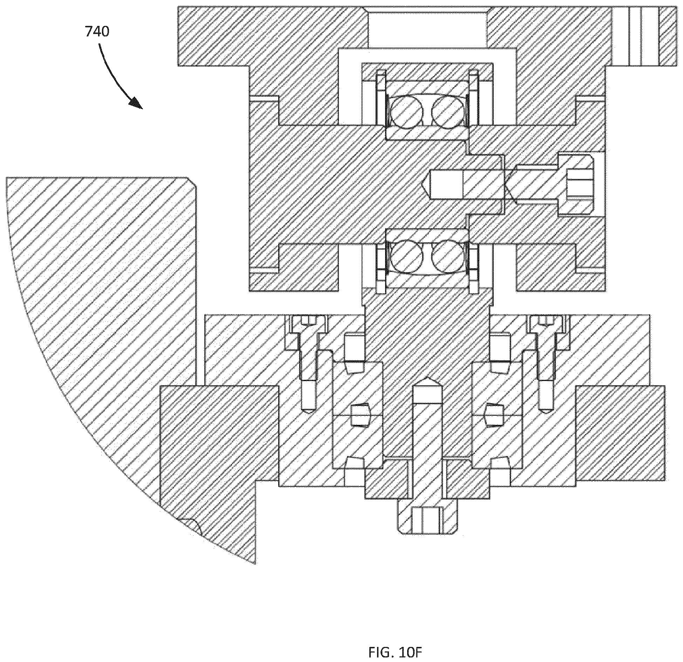

Fig. 10A is a perspective view of an embodiment of the second pivot assembly 740 together with a moving element. Figs. 10B-E are top, front, side, and side cross-sectional views of the second pivot assembly of Fig. 10A. Fig. 10F is a detailed sectional view of the second pivot assembly. As illustrated, the second pivot assembly 740 is configured to allow the tooling plate to move in relation to the moving elements as follows:
Roll - 1.5 degree permissible misalignment (at the Pitch bearing)
Pitch - Option 1: Self-aligning ball bearing (double row/double contact/sealed) with T-shaped member supported by a body, wherein the body may include a base for connection to the moving element and a top for connection to the tooling plate
- Option 2: Radial spherical plain bearing
- Option 3: Spherical roller bearing (for larger applications)
Yaw - Option 1: 2x back-to-back angular contact bearings with housing
- Option 2: 2x back-to-back angular contact bearings + 1x deep groove ball bearing with housing (illustrated)

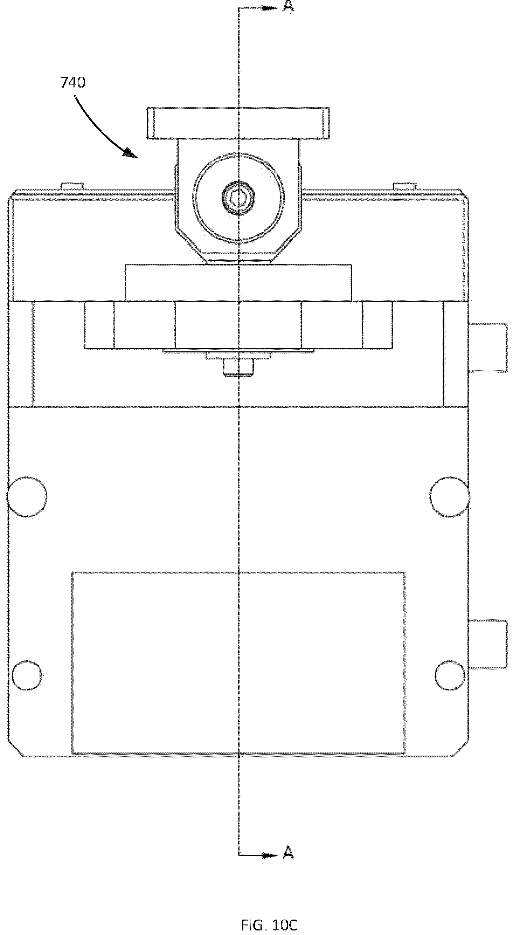

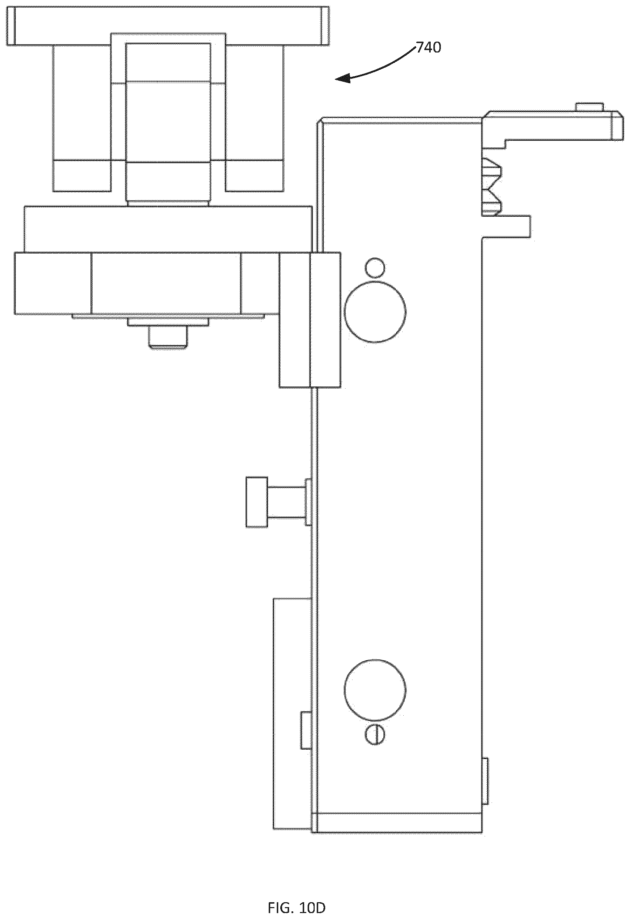

The second pivot assembly 740 is also mounted on a carrier plate 730 of the moving element. As illustrated, the second pivot assembly is configured to allow the tooling plate to rotate about a central (yaw) axis (into and out of the page in Fig. 10B) and rotate about a pitch axis, perpendicular to the yaw axis (into and out of the page in Fig. 10C). In addition, the second pivot assembly is configured to rotate, to at least a predetermined amount, about a roll axis, perpendicular to both the yaw and pitch axes (into and out of the page in Fig. 10D).

It will be understood that the first and second pivot assemblies may be mounted on either of the primary and secondary moving elements. In some cases, the first and second pivot assemblies may be of a single type. For example, two first or second pivot assemblies can be used with one on each of the primary and secondary moving elements.

In various embodiments, the use of two (primary and secondary) moving elements is intended to double the payload that could typically be carried by a single moving element. It will be understood that the payload capacity will also be impacted by the number of moving elements in the payload assembly, the magnetic force between the moving elements and track, and the like. Further, it will be understood that the pitch between the primary and secondary moving elements will generally be determined based on the configuration of curved track sections on the linear motor conveyor system and the ability of the moving elements to traverse the curved track sections. The intention is that the primary and secondary (and intermediate) moving elements (as well as the first and second pivot assemblies) will be able to adapt to both straight and curved track section profiles and will also have the ability to adapt to track section tolerances, inaccuracies or the like. As one example, the conveyor system may be configured for a situation in which yaw, pitch, and/or roll angular misalignment will be approximately 0.64deg (1:100 slope) or less.

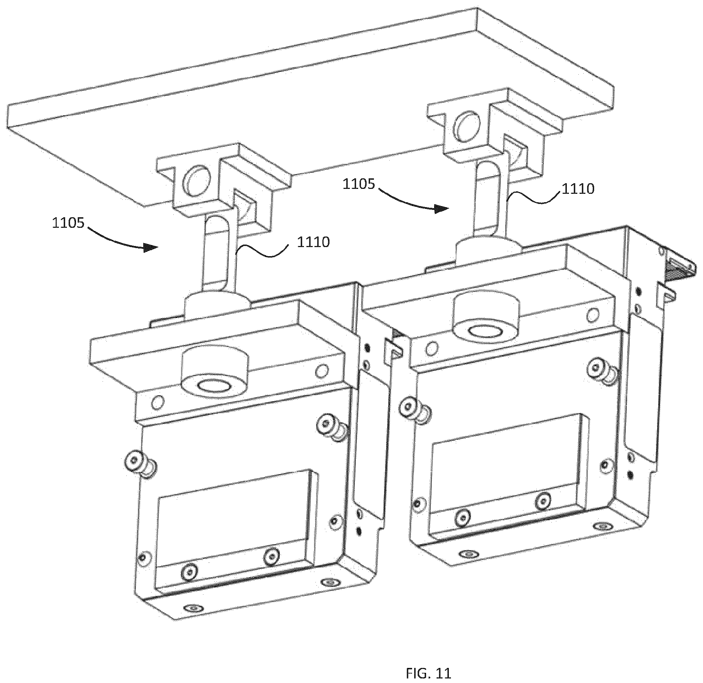

Fig. 11 illustrates a perspective view of a large/heavy payload apparatus according to another embodiment herein. The above embodiment of Figures 7 to 10 includes the first pivot assembly with roll locked and the second pivot assembly with roll allowed. This arrangement allows the large/heavy payload apparatus to operate around curves and adapt to tolerance issues and the like. This arrangement can also decrease some costs by using relatively standard parts and having only one pivot assembly provide roll. In the embodiment shown in Fig. 11, the first and second pivot assemblies 1105 are configured to be the same and any roll adjustment for the payload can be shared between the first and second pivot assemblies. In particular, as illustrated in Fig. 11, roll pivoting can be provided by a stiff flexure section 1110 provided to the pivot assemblies. This arrangement is intended to distribute any necessary roll pivoting between the two pivot assemblies. While this approach may reduce the overall stiffness of the tooling plate on the pivot assemblies, appropriate configuration of the stiff flexure section 1110 can allow for an acceptable amount of roll without impacting stiffness significantly. It will be understood that this concept can also be incorporated into other forms of pivot assemblies.

In another embodiment herein, there is provided a method for carrying a heavy/large payload on a liner motor conveyor system. The method includes configuring at least two moving elements (sometimes called a pair) to support a tooling plate; providing each moving element with a pivot assembly supporting the tooling plate, wherein each of the pivot assemblies allow the tooling plate to move in relation to the moving element in at least two degrees of freedom, such as pitch and yaw. The method may include configuring at least one pivot assembly to allow the tooling plate to move in a third degree of freedom. In some cases, the third degree of freedom is roll.

In the preceding description, for purposes of explanation, numerous details are set forth in order to provide a thorough understanding of the embodiments. However, it will be apparent to one skilled in the art that these specific details may not be required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

The above-described embodiments are intended to be examples only. Alterations, modifications and variations can be effected to the particular embodiments by those of skill in the art without departing from the scope, which is defined solely by the claims appended hereto.

## Claims

1. A linear motor conveyor system comprising:
a track;
at least two moving elements configured to move on the track, wherein the at least two moving elements comprise a primary moving element and a secondary moving element;
a tooling plate mounted on the at least two moving elements, the tooling plate mounted to the at least two moving elements by a support apparatus comprising:
a first pivot assembly provided to the primary moving element; and
a second pivot assembly provided to the secondary moving element,
wherein the first pivot assembly and the second pivot assembly support the tooling plate such that the tooling plate can move in relation to the at least two moving elements through at least two degrees of freedom.

2. A linear motor conveyor system according to claim 1, wherein the at least two degrees of freedom comprise pitch and yaw.

3. A linear motor conveyor system according to claim 1, wherein the at least two degrees of freedom comprise three degrees of freedom and the three degrees of freedom comprise pitch, yaw and roll.

4. A linear motor conveyor system according to any one of claims 1 to 3, wherein the first pivot assembly is configured to provide rotation about each of a yaw axis and a pitch axis, relative to the moving element carrying the first pivot assembly.

5. A linear motor conveyor system according to any one of claims 1 to 3, wherein the second pivot assembly is configured to provide rotation about each of a pitch, yaw and roll axis, relative to the moving element carrying the second pivot assembly.

6. A linear motor conveyor system according to any one of claims 1 to 5, wherein the first pivot assembly and second pivot assembly have the same configuration.

7. A linear motor conveyor system according to any one of claims 1 to 6, wherein at least one of the first pivot assembly and the second pivot assembly comprise:
a body;
a T-shaped member; and
ball bearings supporting the T-shaped member relative to the body to allow the T-shaped member to provide rotation about a yaw axis and a pitch axis, relative to the moving element.

8. A linear motor conveyor system according to claim 7, wherein at least one of the first pivot assembly and the second pivot assembly further comprise a flexure section provided to the T-shaped member to allow the T-shaped member to provide rotation about a roll axis, relative to the moving element.

9. A linear motor conveyor system according to claim 1, wherein the second pivot assembly is configured to rotate about a yaw axis, rotate about a pitch axis, perpendicular to the yaw axis and rotate, to at least a predetermined amount, about a roll axis, perpendicular to both the yaw and pitch axes.

10. A linear motor conveyor system according to any one of claims 1 to 9, further comprising at least one intermediate moving element between the primary and secondary moving elements, the support system further including a connection between the at least one intermediate moving element and the tooling plate.

11. A linear motor conveyor system according to claim 10, wherein the connection between the at least one intermediate moving element and the tooling plate comprises a slide that allows for movement of the tooling plate in relation to the intermediate moving element in at least one degree of freedom.

12. A method for carrying a heavy/large payload on a linear motor conveyor system, the method comprising:
configuring at least two moving elements to support a tooling plate by providing each moving element with a pivot assembly supporting the tooling plate,
wherein each of the pivot assemblies allow the tooling plate to move in relation to the moving element in at least two degrees of freedom.

13. A method according to claim 12, wherein the at least two degrees of freedom comprise pitch and yaw.

14. A method according to any one of claims 12 to 13, wherein the method further comprises configuring at least one pivot assembly to allow the tooling plate to move in a third degree of freedom

15. A method according to claim 14, wherein the third degree of freedom is roll.
